# FASCICULE DE BREVET EUROPEEN

(11) **EP 0 903 503 B1**
(45) Date de publication et mention de la délivrance du brevet: **12.07.2000**
(21) Numéro de dépôt: 98116558.2
(22) Date de dépôt: 02.09.1998
(51) Int. Cl.: F16B 2/06, F16L 3/24

(54) **Système de fixation d'éléments de construction secondaires sur des plats à boudin utilisés dans la construction marine**
System zur Befestigung von sekundären Bauelementen an Wulstflachbauteilen, die im Wasserbau benutzt werden
Device for connecting secondary construction members to bulb bars in marine construction

(30) Priorité: 19.09.1997 FR 9711849
(43) Date de publication de la demande: 24.03.1999
(73) Titulaire: EBO SYSTEMS S.A.S., 54920 Villers La Montagne (FR)
(72) Inventeur: Arnould, Roger, 57000 Metz (FR); Paoli, Georges, 57000 Metz (FR)
(74) Mandataire: Ballot, Paul Denis Jacques

(56) Documents cités:
- GB-A- 667 090
- US-A- 3 387 814
- US-A- 4 367 972

## Description

L'invention concerne un système de fixation d'éléments de construction secondaires sur des plats à boudin utilisés dans la construction marine (US 3 387 814 A).

Les plats à boudin sont des profilés comportant une âme plate présentant deux faces planes parallèles et un boudin situé d'un seul coté de l'âme. Le boudin comporte une face perpendiculaire à l'âme, désigné par la suite semelle, et une face oblique raccordée à la semelle par un bout arrondi.

Quelques soient leurs dimensions extérieures, on peut noter que tous les plats à boudin ont une face oblique offrant la même inclinaison par rapport à la semelle.

Ces plats à boudin sont couramment utilisés pour constituer l'armature d'une construction navale ou maritime, car ils possèdent un moment d'inertie important, du fait de la position particulière du boudin, et acceptent plus facilement des déformations, en particulier sous des contraintes de torsion, que les profilés classiques utilisés dans la construction mécanique générale.

Des éléments de constructions secondaires, tels que des canalisations de transport de fluides, des profilés de passage de câbles électriques ou de fixation de coffret d'armoire électrique, peuvent être rapportés sur l'armature de la construction et y être solidarisés.

On connaît, par le document RU-785175, un système de fixation sur les plats à boudin constitué d'une pince à griffe. La pince, s'étendant obliquement par rapport à l'âme du plat, comporte deux doigts, formant la griffe, qui s'appuient contre une face oblique du boudin et un sabot, pouvant coulisser à l'intérieur de la pince, comporte, à l'une de ses extrémités un épaulement dont les faces peuvent venir en contact avec les faces extérieures planes du boudin. Lors du coulissement du sabot, le boudin est alors comprimé entre le sabot et la griffe. Ce système déborde fortement du profilé, du fait de ses dimensions, et n'est pas adapté pour la fixation d'éléments de construction secondaires, tels que ceux décrits précédemment.

L'invention a pour but de proposer un système de fixation simplifié offrant la possibilité de monter de tels éléments de construction, le système venant s'intercaler entre l'élément de construction et le plat à boudin, ce qui permet de supprimer le soudage d'éléments en acier directement sur les plats.

Avec ces objectifs en vue, l'invention a pour objet un système de fixation d'éléments de construction secondaires sur des plats à boudin constituant l'armature d'une construction navale ou maritime, le plat à boudin comportant une âme plate présentant deux faces planes parallèles et un boudin, situé d'un seul coté de l'âme, comportant une semelle perpendiculaire à l'âme et une face oblique raccordée à la semelle par un bout arrondi, caractérisé en ce qu'il comporte :
- une platine destinée à être appliquée contre la semelle du boudin,
- une plaque d'appui solidaire de la platine, perpendiculaire à celle-ci et destinée à être appliquée contre la face de l'âme du plat opposée à celle comportant le boudin,
- une bride comportant un nez qui présente une face d'appui oblique avec deux patins destinés à appuyer contre la face oblique du boudin, et un pied comportant un trou pour assurer le passage d'un moyen de serrage pour serrer la bride sur la platine, le pied présentant une zone d'appui en contact avec la platine, située du coté opposé à la face d'appui oblique de la bride par rapport à l'axe du trou.

Préférentiellement, la zone d'appui est constituée par une surface d'appui biseautée du pied.

La platine et la plaque d'appui forment une équerre et sont placées respectivement contre la semelle du boudin et la face de l'âme opposée au boudin. Un moyen de serrage, tel qu'un boulon, traverse la platine et vient se visser dans la bride en forme d'équerre. Lors du serrage du moyen de serrage, du fait que le pied de la bride est biseauté, la bride peut pivoter faiblement autour d'une arête, constituant le contact du pied de la bride sur la platine.

Les deux patins de la face d'appui de la bride sont situés à chaque extrémité latérale de la bride, de part et d'autre d'un plan médian de la bride. La disposition éloignée des patins permet d'avoir une légère flexion longitudinale élastique du nez de la bride entre les deux patins. La contrainte flexion élastique est imposée par le serrage du moyen de serrage, lorsque les patins sont appliqués contre la face oblique du boudin, en y exerçant un effort sensiblement perpendiculaire à celle-ci. Les composantes de l'effort des patins assurent le maintien et permettent de plaquer la platine et la plaque d'appui contre les faces planes du boudin. De plus, la flexion élastique du nez de la bride garantit une bonne tenue du système de fixation aux vibrations.

Selon une disposition particulière, les éléments de construction sont fixés sur la platine.

La platine, la plaque d'appui et les éléments de constructions peuvent préalablement être solidarisés ensemble, par mécanosoudure, de manière à former des éléments préfabriqués. La fixation définitive de ces éléments sur le plat à boudin s'obtient par la mise en place de la bride et vissage du moyen de serrage. On peut donc ainsi supprimer les opérations de soudage directes sur les plats à boudins, et les risques d'incendie inhérents à ces opérations réalisées sur place dans les chantiers de construction marine.

Les autres avantages et caractéristiques de l'invention apparaîtront dans la description qui va suivre d'un système de fixation conforme à l'invention.

On se reportera aux dessins annexés dans lesquels :
- la figure 1 est une vue générale partielle en perspective du système de fixation montrant en particulier le plat à boudin,
- la figure 2 est une vue latérale correspondante à la figure 1,
- la figure 3 est une vue partielle en perspective du système de fixation montrant l'utilisation d'une entretoise,
- la figure 4 est une vue latérale correpondante à la figure 3,
- la figure 5 est une vue en perspective de la bride,
- la figure 6 est une vue de face du système de fixation correspondante à la figure 1.

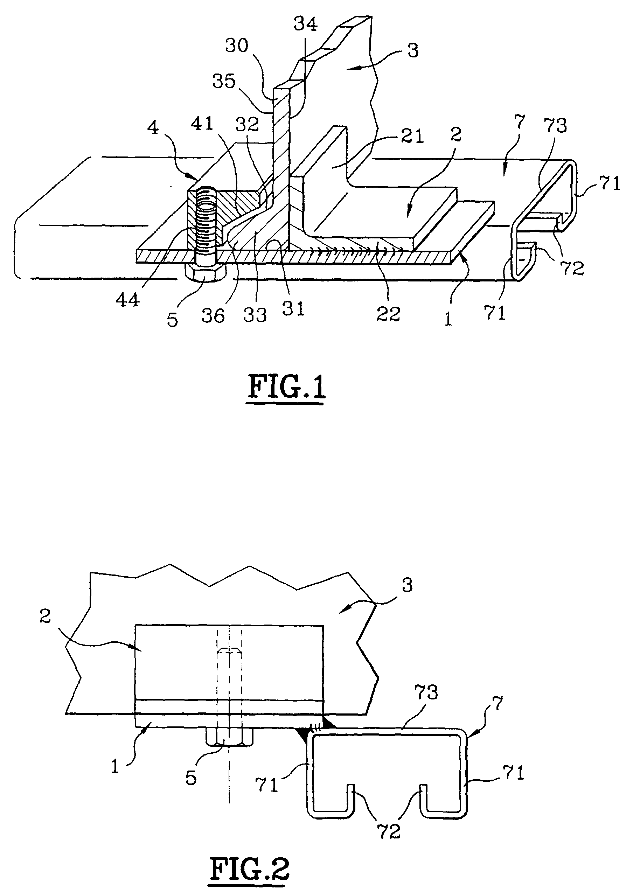

Le plat à boudin 3, montré figure 1, comporte une âme plate 30 présentant deux faces planes parallèles 34, 35 et le boudin 33 est situé du coté de la face 35.

Le boudin 33 comporte une semelle 31 sensiblement perpendiculaire à la face 34 de l'âme et une face oblique 32, formant un angle d'environ 30° par rapport à la semelle 31. Comme on l'a dit précédemment, tous les plats à boudin ont une face oblique 32 présentant la même inclinaison par rapport à la semelle 31. Cette conception particulière permet au système de fixation, décrit par la suite, d'être aisément adapté à tous les plats à boudin.

Le système de fixation, montré figure 1, comporte une platine 1 sur laquelle est soudée une cornière 2. L'aile 21 de la cornière, perpendiculaire à la platine 1, forme une plaque d'appui placée contre la face 34 de l'âme 30 du plat 3 et la platine 1 est placée contre la semelle 31 du boudin 33.

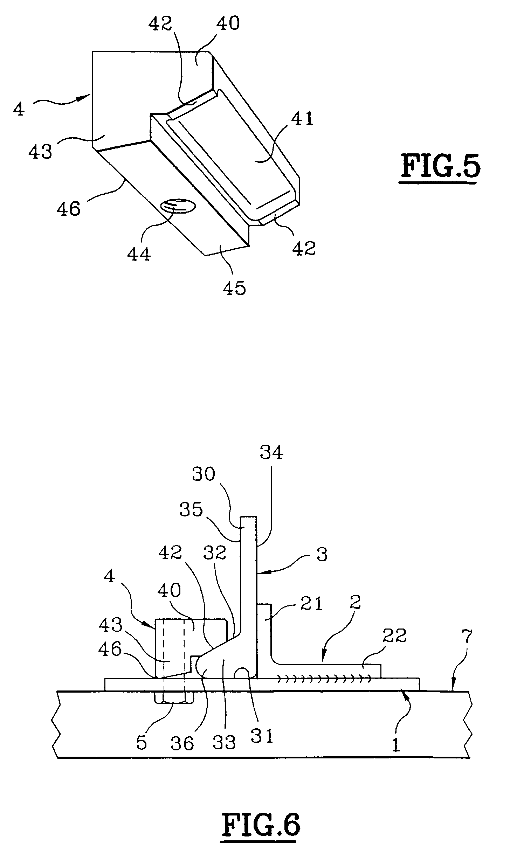

La bride 4, montrée en détail figure 5, a une forme générale en équerre et comporte un pied 43 dont la surface d'appui 45 est biseautée. Le pied 43 est en contact avec la platine 1 sur une arête 46 située du coté opposé à la surface d'appui oblique 41 par rapport à l'axe d'un trou fileté 44 réalisé dans le pied 43 de la bride, comme montré figure 6. Cette disposition permet d'avoir un faible pivotement de la bride autour de l'arête 46 lorsqu'on vient visser un boulon 5, en passant à travers la platine 1, dans le trou 44.

La bride 4 comporte un nez 40 présentant une face d'appui oblique 41. Deux patins 42, s'étendant au-delà de la face oblique 41, prennent appui sur la face oblique 31 du boudin 33 et sont situés à chaque extrémité latérale de la bride 4, de part et d'autre d'un plan médian de la bride. La surface d'appui des patins 42 offre un contact sensiblement ponctuel et la disposition éloignée des patins permet d'avoir une flexion élastique longitudinale du nez de la bride entre les patins. La flexion élastique est engendrée lorsque les deux patins 42 sont au contact de la face oblique 32 du boudin 33, sous l'effort exercé lors du serrage du boulon 5.

L'élément de construction 7, montré figure 1, est constitué par un profilé 7, de forme générale en U, comportant deux ailes 71 dont les extrémités 72 sont repliées en crochet vers l'intérieur du profilé 7. Ce type de profilé 7, connu de l'homme du métier, sert classiquement à la fixation des coffrets d'armoires électriques, d'appareils électriques et de systèmes de support pour chemins de câbles. Bien entendu, le système de fixation n'est pas limité qu'à cette application.

Le profilé 7 est solidarisé sur la platine 1 par un cordon de soudure réalisé entre le bord de la platine 1 et le fond 73 du profilé, comme le montre la figure 2.

De manière à simplifier la réalisation du système de fixation, on peut utiliser une cornière (non représentée) dont une des ailes serait formée par la platine 1 et l'autre aile par la plaque d'appui 21.

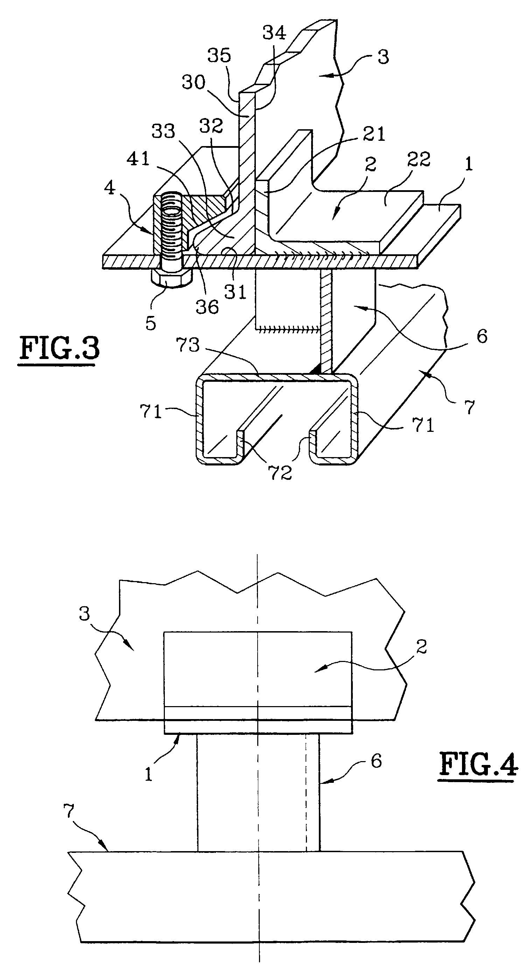

Une variante de réalisation, montrée figure 3, consiste à utiliser une entretoise 6 solidarisée sur la platine 1. Cette entretoise 6, réalisée en utilisant un morceau de cornière, permet d'écarter les éléments de construction de la platine 1 en ménageant un espace permettant la mise en place d'une couche d'isolation, de cloisons, de faux-plafond, etc. Le profilé 7 est alors fixé sur l'entretoise 6.

L'invention ne se limite pas au mode de réalisation décrit ci-dessus uniquement à titre d'exemple. En particulier :
- Le système de fixation pourra être utilisé pour assurer l'accrochage sur les plats à boudins d'éléments constitués par des canalisations ou des conduites contenant du fluide. La platine 1 comportera alors des moyens de fixation adéquats, par exemple des crochets, permettant un maintien de ces éléments,
- Le pied 43 de la bride peut comporter également deux patins qui seront placés aux extrémités latérales de la bride, de part et d'autre d'un plan médian de la bride et sur l'arête 46,
- La bride 4 peut être réalisée sous la forme d'une fourche horizontale présentant deux branches pourvue de patins 42. Le moyen de serrage 5 peut passer entre les deux branches et le pied 43 de la bride comporter un plot d'appui sur la platine.

## Revendications

1. Système de fixation d'éléments de construction secondaires (7) sur des plats à boudin (3) constituant l'armature d'une construction navale ou maritime, le plat à boudin comportant une âme (30) plate présentant deux faces planes parallèles (34, 35) et un boudin (33), situé d'un seul coté de l'âme, comportant une semelle (31) perpendiculaire à l'âme et une face oblique (32) raccordée à la semelle par un bout arrondi (36), caractérisé en ce qu'il comporte :
- une platine (1) destinée à être appliquée contre la semelle (31) du boudin (33),
- une plaque d'appui (21) solidaire de la platine (1), perpendiculaire à celle-ci et destinée à être appliquée contre la face (34) de l'âme (30) du plat (3) opposée à celle comportant le boudin (33),
- une bride (4) comportant un nez (40) qui présente une face d'appui (41) oblique avec deux patins (42) destinés à appuyer contre la face oblique (32) du boudin, et un pied (43) comportant un trou (44) pour assurer le passage d'un moyen de serrage (5) pour serrer la bride (4) sur la platine (1), le pied (43) présentant une zone d'appui (45) en contact avec la platine (1), située du coté opposé à la face d'appui oblique (41) de la bride (4) par rapport à l'axe du trou (44).

2. Système de fixation selon la revendication 1, caractérisé en ce que la zone d'appui est constituée par une surface d'appui biseautée (45) du pied (43).

3. Système de fixation selon la revendication 1, caractérisé en ce que la plaque d'appui (21) est formée par une aile (21) d'une cornière (2) soudée sur la platine (1).

4. Système de fixation selon la revendication 1, caractérisé en ce que la platine (1) et la plaque d'appui (21) sont formées par les deux ailes d'une même cornière.

5. Système de fixation selon la revendication 1, caractérisé en ce que les éléments de construction secondaires (7) sont fixés sur la platine (1).

6. Système de fixation selon la revendication 1, caractérisé en ce que les éléments de construction secondaires (7) sont fixés sur la platine (1) par l'intermédiaire d'une entretoise (6).

## Claims

1. System for fixing secondary construction members (7) to bulb flats (3) constituting the framework of a naval or maritime construction, the bulb flat having a flat web (30) with two parallel plane faces (34, 35) and a bulb (33), situated on only one side of the web, having a sole plate (31) perpendicular to the web and an oblique face (32) connected to the sole plate by a rounded end (36), characterised in that it has:
- a platen (1) intended to be applied against the sole plate (31) of the bulb (33),
- an abutment plate (21) fixed to the platen (1), perpendicular thereto and intended to be applied against the face (34) of the web (30) of the flat (3) opposite to the one having the bulb (33),
- a flange (4) having a nose (40) which has an oblique abutment face (41) with two runners (42) intended to bear against the oblique face (32) of the bulb, and a foot (43) having a hole (44) for providing the passage of a clamping means (5) for clamping the flange (4) on the platen (1), the foot (43) having an abutment area (45) in contact with the platen (1), situated on the side opposite to the oblique abutment face (41) of the flange (4) with respect to the axis of the hole (44).

2. Fixing system according to Claim 1, characterised in that the abutment area consists of a bevelled abutment surface (45) of the foot (43).

3. Fixing system according to Claim 1, characterised in that the abutment plate (21) is formed by a wing (21) of an angle bracket (2) welded to the platen (1).

4. Fixing system accordir:g to Claim 1, characterised in that the platen (1) and abutment plate (21) are formed by the two wings of one and the same angle bracket.

5. Fixing system according to Claim 1, characterised in that the secondary construction members (7) are fixed to the platen (1).

6. Fixing system according to Claim 1, characterised in that the secondary construction members (7) are fixed to the platen (1) by means of a strut (6).

## Patentansprüche

1. System zur Befestigung von sekundären Bauelementen (7) auf Wulstflachbauteilen (3), die die Hülle eines Schiffs- oder Wasserbauwerks bilden, wobei das Wulstflachbauteil eine ebene Seele (30) aufweist, die zwei ebene, parallele Flächen (34, 35) darbietet, sowie einen Wulst (33), der auf einer einzigen Seite der Seele gelegen ist, mit einer Sohle (31) senkrecht zur Seele und einer Schrägfläche (32), die mit der Sohle durch ein abgerundetes Endstück (36) verbunden ist, gekennzeichnet durch:
- eine Halteplatte (1), die zur Anlage gegen die Sohle (31) des Wulstes (33) bestimmt ist.
- eine Anlageplatte (21), die fest mit der Halteplatte (1) verbunden ist, sich senkrecht zu dieser erstreckt und dazu bestimmt ist, gegen die Stirnfläche (34) der Seele (30) das Flachbauteils (3) angelegt zu werden, die derjenigen entgegengesetzt ist, die den Wulst (33) trägt,
- einen Bügel (4), der eine Nase (40) aufweist, die eine schräge Anlagefläche (41) darbietet, mit zwei Pupßplatten (42), die dazu bestimmt sind, gegen die Schrägfläche (32) des Wulstes anzuliegen, sowie einen Fuß (43), der eine Bohrung (44) aufweist. um den Durchtritt einer Spanneinrichtung (5) sicherzustellen, um den Bügel (4) auf der Halteplatte (1) festzuspannen, wobei der Fuß (43) eine Anlagezone (45) aufweist, die in Berührung mit der Halteplatte (1) steht und auf der Seite des Bügels (4) gelegen ist, die der schrägen Anlagefläche (41) in Bezug auf die Achse der Bohrung (44) entgegengesetzt ist.

2. Befestigungssystem nach Anspruch 1, dadurch gekennzeichnet, daß die Anlagezone von einer abgeschrägten Anlagefläche (45) des Fußes (43) gebildet ist.

3. Befestigungssystem nach Anspruch 1, dadurch gekennzeichnet, daß die Anlageplatte (21) durch einen Schenkel (21) eines Winkelprofils (2) gebildet ist. das auf der Halteplatte (1) aufgeschweißt ist.

4. Befestigungssystem nach Anspruch 1, dadurch gekennzeichnet, daß die Halteplatte (1) und die Anlageplatte (21) durch die beiden Schenkel ein und desselben Winkelprofils gebildet sind.

5. Befestigungssystem nach Anspruch 1, dadurch gekennzeichnet, daß die sekundären Bauelemente (7) auf der Halteplatte (1) befestigt sind.

6. Befestigungssystem, nach Anspruch 1, dadurch gekennzeichnet, daß die sekundären Bauelemente (7) auf der Halteplatte (1) unter Zwischenanordnung eines Distanzstücks (6) befestigt sind.
